# EUROPEAN PATENT APPLICATION

(11) **EP 1 990 388 A2**
(43) Date of publication of application: **12.11.2008**
(21) Application number: 08008688.7
(22) Date of filing: 08.05.2008
(51) Int. Cl.: C09J 7/00

(54) **Double-sided pressure-sensitive adhesive sheet**

(30) Priority: 11.05.2007 JP 2007126461
(71) Applicant: NITTO DENKO CORPORATION, Ibaraki-shi, Osaka 567-8680 (JP)
(72) Inventor: Takahashi, Akiko c/o Nitto Denko Corporation, Osaka 567-8680 (JP); Ikeya, Mami c/o Nitto Denko Corporation, Osaka 567-8680 (JP)
(74) Representative: Grünecker, Kinkeldey, Stockmair & Schwanhäusser Anwaltssozietät

(57) **Abstract**

A double-sided PSA sheet 11 comprises PSA layers 2 formed of a water-dispersed PSA composition and a non-woven fabric substrate 1 to support the PSA layers. The substrate 1 contains hemp as a fiber component and is processed with an impregnating agent selected from a group consisting of viscose and starches. The substrate 1 has a grammage of 7 g/m² to 17 g/m². The sheet 11 provides excellent adhesive performance and can be removed without substrate failure. Therefore, it is suitable, for example, for fastening recyclable parts.

## Description

### BACKGROUND OF THE INVENTION

### 1. Field of the Invention

The present invention relates to a double-sided pressure-sensitive adhesive (PSA) sheet comprising a non-woven fabric substrate and PSA layers formed of a water-dispersed PSA composition. In particular, it relates to a double-sided PSA sheet suitable for use with recyclable product parts.
The present application claims priority from Japanese Patent Application No. 2007-126461 filed on May 11, 2007, the entire contents of which are incorporated herein by reference.

### 2. Description of the Related Art

Double-sided PSA sheets with a non-woven fabric substrate (support) are widely used in various industrial fields such as household appliances, automobiles, office automation equipment and the like as a convenient and reliable means of joining. Lately, in order to save resources, these products are often disassembled after use and the resulting parts or materials are reused (recycled) when possible. Recycling of the parts or materials joined to each other with a double-sided PSA sheet involves disassembling the parts by disconnecting at the PSA joint and subsequently detaching (removing) the remaining PSA sheet from the separated parts. During the initial disassembling step, if the double-sided PSA sheet results in substrate failure (shearing of substrate) which is likely to develop two-dimensionally across the substrate shared between the PSA layers (interlayer failure), pieces of the double-sided PSA sheet with the exposed non-woven fabric substrate will be left on the surfaces of the separated parts. Removal of such pieces (residues) significantly lowers the efficiency of recycling operations. Examples of related art documents describing technologies to avoid such substrate failure include Japanese Patent Application Publication Nos. 2006-143856, 2001-152111 and 2000-265140.

When used as a joint as described above, it is desirable that the double-sided PSA sheet exhibit not only adhesiveness, but also the ability to follow surface contours (irregularities and curves etc.) of the adherend. The contour-following ability can be evaluated in terms of adhesiveness to a curved surface or low repulsion. With insufficient contour-following ability, lifting or peeling of the joint is likely to occur when used on an adherend with a non-flat surface (curved surface and the like). It is desirable that a double-sided PSA sheet have properties such as adhesiveness, contour-following ability and the like that are sufficient enough for its applications whether or not the parts to which the PSA sheet is attached are to be recycled. So as to satisfy the issue of the above-mentioned substrate failure, it will be inadequate to just decrease the adhesiveness to a point where the substrate failure can be avoided.

### SUMMARY OF THE INVENTION

As for the production of double-sided PSA sheets, it has been common to use a solvent-based composition in which a PSA component (polymer or the like) is dissolved in an organic solvent Recently, however, in order to decrease the amounts of volatile organic compounds (VOCs) emitted from double-sided PSA sheets, increasingly preferred is an aqueous dispersion-type PSA composition in which a PSA component is dispersed in water (hereinafter, referred to as water-dispersed PSA composition). Such shifting to a water-dispersed PSA composition has been considered in various fields, not limited to the field of double-sided PSA sheets. This has motivated researchers to develop a water-dispersed PSA composition that provides adhesive performance (the above contour-following ability and the like) comparable to or greater than that of the solvent-based PSA compositions.

However, a double-sided PSA sheet formed of a water-dispersed PSA composition is more likely to result in substrate failure (typically, interlayer failure) as compared to those formed of a solvent-based PSA composition. Therefore, the conventional double-sided PSA sheet obtained by using a water-dispersed PSA composition has not been able to provide adhesive performance and substrate failure resistance both at high levels at the same time. This has been one of the reasons to hinder the use of a water-dispersed PSA composition in place of a solvent-based composition in the field of double-sided PSA sheets, especially, of those applied to recyclable parts.

An object of the present invention is to provide a double-sided PSA sheet that exhibits high levels of adhesive performance and substrate failure resistance both at the same time while comprising a non-woven fabric substrate and PSA layers formed of a water-dispersed PSA composition.

The present invention provides a double-sided PSA sheet comprising a PSA layer formed of a water-dispersed PSA composition and a non-woven fabric substrate to support the PSA layer. The non-woven fabric substrate constituting the double-sided PSA sheet contains hemp as a fiber component and the substrate is pre-treated with an impregnating agent selected from a group consisting of viscose and starches. The non-woven fabric substrate has a grammage of about 7 g/m² to 17 g/m².
The non-woven fabric substrate exhibits excellent strength because it contains hemp (typically, manila hemp) as a fiber component. Furthermore, with a grammage within an appropriate range and as a result of the pre-treatment with an aforementioned specific impregnating agent, a double-sided PSA sheet comprising the non-woven fabric substrate with a PSA layer formed of a water-dispersed PSA composition exhibits excellent adhesive properties (for instance, adhesiveness, contour-following ability) and can be peeled easily without resulting in substrate failure when detached (removed) from the adherend.

As for the water-dispersed PSA composition, for example, can be preferably used an aqueous emulsion-type PSA composition comprising primarily an acrylic polymer that is dispersed in water.

The aforementioned PSA layer can be formed by applying to the non-woven fabric substrate a PSA film that has been prepared by pre-drying the above PSA composition. It is desirable that the double-sided PSA sheet be prepared by laminating such PSA films on the both surfaces (both sides) of the non-woven fabric substrate. The double-sided PSA sheet disclosed herein has a grammage in an appropriate range and comprises a non-woven fabric substrate pre-treated with an aforementioned specific impregnating agent. Therefore, it exhibits both excellent adhesive properties and substrate failure resistance. For example, as compared to a method in which the PSA layer is formed by coating a PSA composition to non-woven fabric and then drying, the method of laminating a pre-dried PSA film on non-woven fabric is more likely to provide a PSA layer with a smooth surface with fewer bubbles. This enhances the adhesive properties of the resulting double-sided PSA sheet.

The double-sided PSA sheet disclosed herein can be preferably used in various applications in a similar manner to a common double-sided PSA sheet. For instance, it can be preferably used for various purposes (for instance, fastening adherends such as product parts semi-permanently). With the property as described above to allow detachment (removal) from an adherend without substrate failure, it is suitable especially as a double-sided PSA sheet to be used on (adhered to) a recyclable part (typically, for fastening product part to be recycled later to an adherend).

### BRTEF DESCRIPTION OF THE DRAWINGS

Figure 1 is a schematic illustration of a cross section of a typical double-sided PSA sheet configuration.
Figure 2 is a schematic illustration of a cross section of another typical double-sided PSA sheet configuration.

### DETAILED DESCRIPTION OF THE INVENTION

Preferred embodiments of the present invention are described below. Any matters which are necessary for implementing the present invention, but which are not particularly mentioned in this Specification can be considered design matters for a person skilled in the art based on prior art in the technical field. The present invention can be implemented based on the content disclosed in this Specification and on common knowledge in the technical field.

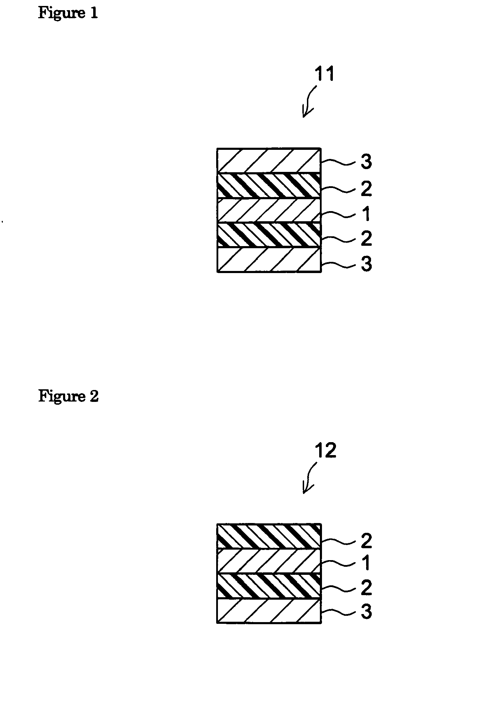

The double-sided PSA sheet of this invention, which may be a long strip such as tape, can be configured, for example, as shown schematically in Figure 1 or 2. A double-sided PSA sheet 11 shown in Figure 1 has a configuration in which PSA layers 2 are provided on both surfaces of a non-woven fabric substrate 1 and the PSA layers 2 are protected with release liners 3 of which at least the surface facing the PSA layer is releasable. A double-sided PSA sheet 12 shown in Figure 2 is configured such that PSA layers 2 are provided on both surfaces of a non-woven fabric substrate 1 and one of the PSA layers is protected with a release liner 3 of which the both surfaces are releasable. With the PSA sheet 12 configured in such a way, the other PSA layer can also be protected with the back side of the release liner 3 by rolling up the PSA sheet 12. To simplify the illustrations in Figures 1 and 2, the interfaces between the PSA layers 2 and the non-woven fabric substrate 1 are shown as straight lines. In fact, however, at least a portion of each PSA layer 2 on the side of non-woven substrate 1 impregnates the non-woven fabric substrate 1.

The non-woven fabric substrate used in the double-sided PSA sheet disclosed herein contains at least hemp as a fiber component. The fiber components of the non-woven fabric substrate may be essentially hemp (typically, manila hemp) or may consist of one, two or more kinds of fiber. Preferred examples of the fiber used along with hemp include, for instance, cellulose fibers such as wood fiber (wood pulp and the like), rayon, acetates and the like. Other examples include polyesters, polyvinyl-alcohols (PVA), polyamides, polyolefins, polyurethanes and the like. The hemp content of the fiber components in the substrate (non-woven fabric) is typically about 10 mass% or greater, preferably about 20 mass% or greater, and more preferably 30 mass% or greater. In a preferred embodiment, the double-sided PSA sheet disclosed herein comprises a non-woven fabric substrate essentially composed of cellulose fiber such as hemp or a mixture of hemp and other cellulose fiber). The term "non-woven fabric" is used here to indicate non-woven fabric for PSA sheets that are used mainly in the field of PSA tapes and other PSA sheets, and typically means non-woven fabric (sometimes called "paper") such as those prepared by conventional papermaking equipments.

The double-sided PSA sheet disclosed herein uses a non-woven fabric substrate t reated with a prescribed impregnating agent (typically, accumulated fiber is coated with a n impregnating agent). The impregnating agent can be selected from a group consisting o f viscose and starches. Here, the concept of "viscose" includes viscose-based materials use d as binders or paper strengthening agents in the field of non-woven fabrics (especially, th ose used as substrates for double-sided PSA sheets). A typical example of the concept of vi scose herein is a viscose-based materials used for the so-called viscose treatment (viscose-i mpregnation process). Similarly, the concept of "starch" includes starch-based materials u sed as binders or paper strengthening agents. The impregnation process using these type s of impregnating agents can be preferably carried out, for instance, by drying the accumu lated fiber (non-woven fabric) coated with a solution of an impregnating agent prepared b y dissolving the agent in an appropriate solvent (preferably water). As long as the impreg nating agent is selected from a group consisting of viscose and starches, the method for ca rrying out the impregnation process is not limited to the above. Other conditions can be c hosen based on the common knowledge of the technology such as the amount of the impre gnating agent applied to the fiber to constitute the non-woven fabric substrate; compositio n of the solvent to dissolve the agent; concentration of the impregnation solution; detailed embodiments of the coating and drying procedures; and so on.

The non-woven fabric substrate has a grammage in the range of about 7 g/m² to 17 g/m² (for example, about 10 g/m² to 17 g/m²). If the grammage is too far above this range, substrate failure is likely to occur. A double-sided PSA sheet comprising a non-woven fabric substrate with too high a grammage also tends to exhibit insufficient contour-following ability. On the other hand, when the grammage is too far below this range, the PSA sheet tends to get easily broken off in the middle when removing it from product parts (i.e. adherends) which have been disassembled in recycling processes.

Preferred examples of the method for forming the PSA layers in the double-sided PSA sheet disclosed herein include (1) a method in which a water-dispersed PSA composition is applied (typically by coating) on a release liner and dried to form a PSA film on the release liner, and the release liner with the PSA film is affixed to the non-woven fabric substrate to thereby transfer (laminate) the PSA film to the non-woven fabric substrate (hereinafter sometimes called the "transfer method"); and (2) a method in which a water-dispersed PSA composition is directly applied (typically by coating) on a non-woven fabric substrate and dried (hereinafter sometimes called the "direct method" or "direct application method") and the like. These methods may also be combined. For example, PSA films can be formed on one surface of the non-woven fabric substrate by the transfer method and on the other surface by the direct-application method.

In terms of the efficiency of double-sided PSA sheet production, the transfer method is preferably adopted to laminate PSA films on both surfaces of a non-woven fabric substrate (hereinafter, may be referred to as the "double-sided transfer method"). By having a non-woven fabric substrate that satisfies the above-described conditions (grammage, composition of fiber, impregnation process with a specific impregnating agent), the double-sided PSA sheet disclosed herein exhibits excellent adhesive properties (especially contour-following ability) and substrate failure resistance even if it is prepared by the double-sided transfer method.

Accordingly, as another aspect, the present invention provides a method for producing a double-sided PSA sheet comprising the steps of: preparing a non-woven fabric substrate containing hemp as a fiber component that is processed with an impregnating agent selected from a group of viscose and starches, the substrate preferably having a grammage of 7 g/m² to 17 g/m²; forming the PSA films by pre-drying a water-dispersed PSA composition, preferably an aqueous emulsion-type PSA composition in which an acrylic polymer as the main component is dispersed in water; and laminating the PSA films on the both surfaces of the non-woven fabric substrate (typically, forming the PSA films on release liners and then placing them on the both sides of the substrate).

Although this is not a limitation, in terms of avoiding substrate failure and increasing the tensile strength (resistance to tearing at the time of removal from an adherend) of the double-sided PSA sheet when prepared by the transfer method (typically the double-sided transfer method), the non-woven fabric substrate has a thickness in the range of about 15 µm to 70 µm with 30 µm to 60 µm being more preferred. The bulk density of the non-woven fabric substrate is preferred to be in the range of about 0.3 g/cm³ to 0.5 g/cm³.

The PSA composition coating can be applied using conventional coaters such as a gravure roll coater, reverse roll coater, kiss roll coater, dip roll coater, bar coater, knife coater, spray coater and the like. Though not particularly limited, the amount of PSA composition coating may be chosen so as to form a PSA layer of about 20 µm to 150 µm (typically about 40 µm to 100 µm) after dried. The amount of PSA composition coating here indicates the amount of the PSA composition per PSA layer that is formed on a single surface of the non-woven fabric substrate. The preferred minimum amount of coating may differ depending on the kind of non-woven fabric substrate used. Normally, an appropriate amount of coating is chosen so as to form a PSA layer that is about 0.5 to 10 times (preferably about 1 to 5 times or more preferably about 1 to 3 times) the thickness of the non-woven fabric substrate. In terms of facilitating the crosslinking reaction and increasing the production efficiency, it is preferred to dry the PSA composition with heating. Though it depends on the nature of the material to be coated (the release liner and/or non-woven fabric substrate), it is usually preferred to be dried at about 40 °C to 120 °C.

To form the PSA layer of the double-sided PSA sheet disclosed herein, can be selected as appropriate a water-dispersed PSA composition (typically an emulsion) in which an acrylic, polyester, urethane, polyether, rubber, silicone, polyamide, fluorine or other known polymer, which is capable of functioning as the adhesive component, is dispersed in water. An example of a preferred PSA composition takes the form of an aqueous emulsion primarily composed of an acrylic polymer (that is to say that the acrylic polymer amounts to be over 50 mass% of the non-volatiles (the solids) contained in the PSA composition) dispersed in water.

The acrylic polymer may be a polymer obtained by polymerizing (typically by emulsion polymerization) a monomer raw material having an alkyl (meth)acrylate, i.e. a (meth)acrylic acid ester of an alkyl alcohol, as the primary monomer (principal monomer component). Two or more kinds of alkyl(meth)acrylate can be used in combination. The alkyl (meth)acrylate comprised in this monomer raw material is preferably a (meth)acrylic acid ester of an alkyl alcohol with 2 to 20 (more preferably 4 to 10) carbon atoms. Specific examples of the alkyl group in this alkyl alcohol include the ethyl, propyl, isopropyl, butyl, isobutyl, pentyl, isopentyl, hexyl, heptyl, 2-ethylhexyl, isooctyl, isononyl, isodecyl and the like. Particularly desirable examples of the alkyl (meth) acrylate include butyl (meth)acrylate and 2-ethylhexyl (meth)acrylate.

In addition to the alkyl (meth)acrylate as the primary monomer, the monomer raw material may also contain other monomers (copolymer components) as optional components. These "other monomers" may be of one or two or more kinds selected from various monomers that are copolymerizable with the alkyl (meth)acrylate used here. For example, can be used an ethylenic unsaturated monomer having one or two or more functional groups selected from the carboxyl, hydroxyl, amino, amido, epoxy, alkoxysilyl and the like (functional group-containing monomer). Of these, it is desirable to use acrylic acid and/or methacrylic acid. As for the functional group-containing monomer, in addition to acrylic acid and/or methacrylic acid, a (meth)acrylate having an alcoxysilyl group can be used preferably. This functional group-containing monomer is used as a constituent of the monomer raw material together with the alkyl (meth)acrylate that is the primary monomer, and can serve to introduce crosslinking points into the acrylic polymer obtained from the monomer raw material. The type and proportion (copolymer percentage) of the functional group-containing monomer can be chosen appropriately according to the type and amount of the crosslinking agent used, the type of the crosslinking reaction, the desired degree of crosslinking (crosslinking density) and the like.

The water-dispersed PSA composition can be obtained by subjecting the monomer raw material to emulsion polymerization. Embodiments of the emulsion polymerization are not particularly limited, and for example various monomer supplying methods, polymerization conditions (temperature, time, pressure and the like), and materials (polymerization initiator, surfactant and the like) can be employed similarly as to the conventional emulsion polymerization. For example, the monomer raw material can be supplied all at once, gradually (dropwise) or portionwise, etc. All or part of the monomer raw material may also be mixed and emulsified with water in advance, and the resulting emulsion can then be supplied to the reaction vessel.

Polymerization can be carried out, for example, at about 20 to 100°C (typically 40 to 80°C). Examples of polymerization initiators include azo initiators, peroxide initiators, redox initiators and the like, but are not limited to these. The polymerization initiator can be used for example in the amount of about 0.005 to 1 part by mass per 100 parts by mass of the monomer raw material.
As for the emulsifier (surfactant), an anionic emulsifier can be used such as sodium lauryl sulfate, ammonium lauryl sulfate, sodium dodecyl benzene sulfonate, or sodium polyoxyethylene lauryl sulfate or a nonionic emulsifier can be used such as polyoxyethylene alkylether, polyoxyethylene alkylphenylether or the like, for example. These emulsifiers may be used alone or in combination of two or more. The emulsifier can be used for example in the amount of about 0.2 to 10 parts by mass (preferably about 0.5 to 5 parts by mass) per 100 parts by mass of the monomer raw material.

Various conventionally known chain transfer agents (which can also be seen as molecular weight adjusters or polymerization degree adjusters) can be used as necessary in the polymerization. One or two or more such chain transfer agents may be selected from dodecyl mercaptan (dodecanethiol), glycidyl mercaptan, 2-mercaptoethanol and other mercaptans for example. Of these, dodecanethiol is preferably used. The chain transfer agent can be used for example in the amount of about 0.001 to 0.5 parts by mass per 100 parts by mass of the monomer raw material. It can also be used in the amount of about 0.02 to 0.05 parts by mass.
Although this is not a limitation, the emulsion polymerization can be carried out so that the amount of the insoluble matter (gel fraction) remaining after ethyl acetate extractions of the resulting acrylic polymer is 0 mass% or greater, but less than 70 mass%. It can also be performed so that the mass-average molecular weight (Mw) of the tetrahydrofuran (THF)-soluble matter of the acrylic polymer is about 50 × 10⁴ to 100 x 10⁴, for example, based on standard polystyrene.

A crosslinking agent can be compounded as necessary in the PSA composition, which is preferably an acrylic aqueous emulsion of the PSA composition. The crosslinking agent can be any one selected from conventional crosslinking agents such as the carbodiimide crosslinking agents, hydrazine crosslinking agents, epoxy crosslinking agents, isocyanate crosslinking agents, oxazoline crosslinking agents, aziridine crosslinking agents, metal chelate crosslinking agents, silane coupling agents and the like. These can be used alone or in combination of two or more. The amount of the crosslinking agent to be used is not particularly limited, but is generally chosen so that the amount of the insoluble matter (the gel fraction) remaining after ethyl acetate extractions of the PSA that has been formed of the composition (that is, the PSA after crosslinking with the aforementioned crosslinking agent) is about 15 to 70 mass% (for instance, 30 to 55 mass%).

A tackifier may also be compounded in the PSA composition. One or two or more tackifying resins selected from the rosin resins, rosin derivative resins, petroleum resins, terpene resins, phenol resins, ketone resins and other tackifying resins can be used as the tackifier. The compounded amount of the tackifier can generally be about 50 parts by mass or less, for example, based on solid content (nonvolatile content), per 100 parts by mass of the polymer component (for example, the acrylic polymer in the case of an acrylic aqueous emulsion-type PSA composition). Normally, a suitable compounded amount is about 30 parts by mass or less. There is no particular lower limit on the tackifier content, but normally good effects are obtained when it is at least 1 part by mass with respect to 100 parts by mass of the polymer component.

A preferred tackifier has a softening point of for example about 140°C or higher (typically 140 to 180°C) in order to increase the cohesive strength in high-temperature environments. Examples of tackifiers having such a softening point include those available from Arakawa Chemical Industries under the trade names "Super Ester E-865", "Super Ester E-865NT", "Super Ester E-650", "Super Ester E-786-60", "Tamanol E-100", "Tamanol E-200", "Tamanol 803L", "Pensel D-160" and "Pensel KK"; and those available from Yasuhara Chemical under the trade names "YS Polystar S", "YS Polystar T", "Mighty Ace G" and the like, but are not limited to these. These tackifier may be used alone or in combination of two or more. It is desirable that the tackifier be in the form of an aqueous dispersion (tackifier emulsion), and that the tackifier emulsion contain essentially no organic solvent.

The PSA composition may also contain acids or bases (ammonia water or the like), for example, to adjust the pH. Other optional components that can be contained in the composition include viscosity adjusters, leveling agents, plasticizers, fillers, pigments, dyes and other colorants, stabilizers, preservatives, antioxidants and various other additives that are commonly used in the field of aqueous PSA compositions. A conventional wetting agent can also be added to the PSA composition to increase the ability of the PSA to impregnate the non-woven fabric substrate. Adding a wetting agent is particularly effective when the PSA layer is formed by the direct method on at least one side of the non-woven fabric substrate. These various known additives may be used by ordinary methods, and since they are not particular features of the present invention they are not explained in detail.

The double-sided PSA sheet disclosed herein exhibits excellent adhesive properties and substrate failure resistance though it comprises PSA layers formed of a water-dispersed PSA composition. For example, the double-sided PSA sheet may exhibit excellent adhesive properties such as a bond strength (peel strength) of 10 N/20mm (typically, about 10 N/20mm to 15 N/20mm) or greater, which can be measured as described later, and an edge peeling height of 2 mm or less, which can be determined in the contour-following ability evaluation described later; and may exhibit excellent adaptability to recycling as it can be removed with no substrate failure (more preferably without leaving PSA residues) when subjected to the substrate failure test described later as well.

The reason for these desirable effects of the present invention need not to be discussed to carry out this invention, but a few factors related to the effects can be as follows for example. A water-dispersed PSA composition is a heterogeneous system as opposed to a solvent-based PSA composition and the surface tension (polarity) of the dispersion medium is different from that of the solvent-based. Therefore, a water-dispersed PSA composition and/or a PSA (PSA film) formed thereof may be largely different in the impregnation behavior as compared to the solvent-based counterpart. In the production of a double-sided PSA sheet, when a water-dispersed PSA composition is used instead of a solvent-based PSA composition, there is a higher demand for the transfer method than for the direct method in forming the PSA layers. However, impregnating a PSA layer on a non-woven fabric substrate is more difficult in the transfer method as compared to the direct method. Hence, the insufficient impregnating ability of the PSA layer toward non-woven fabric substrate is considered to be one of the reasons for the conventional methods to encounter difficulties in preparing double-sided PSA sheets (especially those used on recyclable parts) having both excellent adhesive properties and resistance to substrate failure (e.g. interlayer failure).
In the present invention, by using a non-woven fabric substrate that contains a specific fiber component, has a grammage in the appropriate range and has been processed (surface-treated) with a prescribed impregnating agent, the non-woven fabric substrate can be well-impregnated with a water-dispersed PSA composition or a PSA (PSA film) formed thereof. This in turn is considered to be one of the reasons that the double-sided PSA sheet exhibits excellent adhesive properties without causing substrate failure.

### EXAMPLES

Some examples of the present invention are explained here, but it is not intended that the present invention be limited by these examples. When not otherwise specified, the terms "part" and "%" in the following explanation are based on mass.

### Example 1

In a reaction vessel equipped with a condenser, nitrogen inlet, thermometer and stirrer, were placed 0.279 g of 2,2'-azobis[N-(2-carboxyethyl)-2-methylpropionamidine]hydrate (polymerization initiator, trade name "VA-057" available from Wako Pure Chemical Industries) and 100 g of ion-exchanged water and the resulting mixture was stirred for 1 hour under nitrogen gas. While maintained at 60 °C, to promote emulsion polymerization reaction, were gradually added dropwise over 3 hours 400 g of a monomer raw material emulsion which was obtained by adding 29 parts butyl acrylate (BA), 67 parts 2-ethylhexyl acrylate (2EHA), 4 parts acrylic acid (AA), 0.02 parts 3-methacryloxypropyl trimethoxysilane (trade name "KBM-503" available from Shin-Etsu Chemical Co., Ltd.), 0.033 parts dodecanethiol (chain transfer agent) and 2 parts sodium polyoxyethylene lauryl sulfate (emulsifier) to 41 parts of ion-exchanged water and emulsifying. After completion of the addition, the mixture was cured (aged) by storing it for 3 hours at the same temperature. 10% ammonium water was added to adjust the pH to 7.5. In this way, an acrylic polymer aqueous dispersion (emulsion) was obtained. This acrylic polymer emulsion is sometimes referred to as "emulsion I" below.

The acrylic polymer of emulsion I was extracted with THF. The mass-average molecular weight (Mw) of the THF-soluble component was 67.1 x 10⁴ based on standard polystyrene. The amount of the ethyl acetate-insoluble component of this acrylic polymer was 47.6 %.

A tackifier emulsion (trade name "Super Ester E-865NT", aqueous dispersion of polymerized rosin resin with a softening point of 160°C, available from Arakawa Chemical Industries) was added to emulsion I in the amount of 20 parts (based on solid content) per 100 parts of acrylic polymer contained in emulsion a. to obtain the PSA composition of Example 1. This PSA composition may be referred to as "PSA composition A." below.

A double-sided PSA sheet was prepared with the PSA composition A and a non-woven fabric substrate. As for the substrate in this example, was used non-woven fabric made of 100 % manila hemp impregnated with viscose (trade name "Hakuyoushi 123", tissue paper available from Nippon Daishowa Paperboard Co., Ltd; sometimes called "non-woven fabric B1" below). Non-woven fabric B1 had a grammage of 12.4 g/m², a thickness of 39 µm, and a bulk density of 0.32 g/cm³.
In particular, the PSA composition A. was coated to a release liner, which was prepared by applying a silicone release agent to woodfree paper, and dried at 100 °C for 3 minutes to form a PSA film of 70-µm thickness on the liner. Two sheets of such release liner with a PSA film were prepared. Of them, a first release liner with a PSA film was placed on one surface of the non-woven fabric B1. The second release liner with a PSA film was placed on the other surface of the non-woven fabric B1. The double-sided PSA sheet of Example 1 was so-obtained by laminating PSA films on the both sides of non-woven fabric B1, that is, by the double-sided transfer method where PSA films are transferred onto both sides of non-woven fabric B1. Both of the PSA surfaces of the double-sided PSA sheet were protected with the release liner used for the preparation of this PSA sheet

### Example 2

A double-sided PSA sheet was prepared by applying the PSA composition A. to a non-woven fabric substrate different from the one used in Example 1. In particular, as for the substrate in this example, a non-woven fabric substrate made of manila hemp, wood pulp and rayon and impregnated with starch (trade name "#6004", tissue paper available from Nippon Daishowa Paperboard Co., Ltd; sometimes called "non-woven fabric B2" below). Non-woven fabric B2 had a grammage of 17 g/m², a thickness of 56 µm, and a bulk density of 0.30 g/cm³. Except for the use of the non-woven fabric B2, the double-sided PSA sheet of Example 2 was obtained in the same way as Example 1.

### Example 3

As for the substrate in this example, was used non-woven fabric made of manila hemp, wood pulp and rayon and impregnated with viscose (refined paper available from Nippon Daishowa Paperboard Co., Ltd; sometimes called "non-woven fabric B3" below). Non-woven fabric B3 had a grammage of 15 g/m², a thickness of 35 µm, and a bulk density of 0.43 g/cm³. Except for the use of non-woven fabric B3, the double-sided PSA sheet of Example 3 was obtained in the same manner as Example 1.

### Example 4

As for the substrate in this example, was used non-woven fabric made of 100 % manila hemp and impregnated with viscose (non-woven fabric available from Nippon Daishowa Paperboard Co., Ltd; sometimes called "non-woven fabric B4" below). Non-woven fabric B4 had a grammage of 14 g/m², a thickness of 45 µm, and a bulk density of 0.31 g/cm³. Except for the use of non-woven fabric B4, the double-sided PSA sheet of Example 4 was obtained in the same manner as Example 1.

### Example 5

As for the substrate in this example, was used non-woven fabric made of 100 % manila hemp with no polymer (resin) impregnation (non-woven fabric available from Nippon Daishowa Paperboard Co., Ltd; sometimes called "non-woven fabric B5" below). Non-woven fabric B5 had a grammage of 14 g/m², a thickness of 53 µm, and a bulk density of 0.26 g/cm³. Except for the use of non-woven fabric B5, the double-sided PSA sheet of Example 5 was obtained in the same manner as Example 1.
It is noted that upon viscose-impregnating treatment non-woven fabric B5 of this example becomes equivalent to non-woven fabric B4 of Example 4.

### Example 6

As for the substrate in this example, was used non-woven fabric made of manila hemp and wood pulp and impregnated with carboxymethyl cellulose (CMC) (trade name "CN-1501", non-woven fabric available from Miki Tokushu Paper Mfg. Co., Ltd; sometimes called "non-woven fabric B6" below). Non-woven fabric B6 had a grammage of 16 g/m², a thickness of 53 µm, and a bulk density of 0.30 g/cm³. Except for the use of non-woven fabric B6, the double-sided PSA sheet of Example 6 was obtained in the same manner as Example 1.

### Example 7

As for the substrate in this example, was used non-woven fabric made of 100 % manila hemp and impregnated with CMC (trade name "CN-1805", non-woven fabric available from Miki Tokushu Paper Mfg. Co., Ltd; sometimes called "non-woven fabric B7" below). Non-woven fabric B7 had a grammage of 16.5 g/m², a thickness of 77 µm, and a bulk density of 0.22 g/cm³. Except for the use of non-woven fabric B7, the double-sided PSA sheet of Example 7 was obtained in the same manner as Example 1.

### Example 8

As for the substrate in this example, was used non-woven fabric made of 100 % manila hemp and impregnated with viscose (non-woven fabric available from Nippon Daishowa Paperboard Co., Ltd; sometimes called "non-woven fabric B8" below). Non-woven fabric B8 had a grammage of 18 g/m², a thickness of 60 µm, and a bulk density of 0.30 g/cm³. Except for the use of non-woven fabric B8, the double-sided PSA sheet of Example 8 was obtained in the same manner as Example 1.

### Example 9

As for the substrate in this example, was used non-woven fabric made of 100 % manila hemp and impregnated with viscose (non-woven fabric available from Nippon Daishowa Paperboard Co., Ltd; sometimes called "non-woven fabric B9" below). Non-woven fabric B9 had a grammage of 23.6 g/m², a thickness of 81 µm, and a bulk density of 0.29 g/cm³. Except for the use of non-woven fabric B9, the double-sided PSA sheet of Example 9 was obtained in the same manner as Example 1.

### Example 10

As for the substrate in this example, was used non-woven fabric made of 100 % manila hemp and impregnated with CMC (trade name "CN-2003", non-woven fabric available from Miki Tokushu Paper Mfg. Co., Ltd; sometimes called "non-woven fabric B10" below). Non-woven fabric B10 had a grammage of 21.1 g/m², a thickness of 78 µm, and a bulk density of 0.27 g/cm³. Except for the use of non-woven fabric B10, the double-sided PSA sheet of Example 10 was obtained in the same manner as Example 1.

### Example 11

As for the substrate in this example, was used non-woven fabric made of wood pulp and PET fiber with no polymer impregnation (PET paper available from Miki Tokushu Paper Mfg. Co., Ltd; sometimes called "non-woven fabric B11" below). Non-woven fabric B11 had a grammage of 12 g/m², a thickness of 49.8 µm, and a bulk density of 0.24 g/cm³. Except for the use of non-woven fabric B11, the double-sided PSA sheet of Example 11 was obtained in the same manner as Example 1.

### Example 12

As for the substrate in this example, was used non-woven fabric made of 100 % wood pulp with no polymer impregnation (RNT paper available from Miki Tokushu Paper Mfg. Co., Ltd; sometimes called "non-woven fabric B12" below). Non-woven fabric B12 had a grammage of 14 g/m², a thickness of 32.5 µm, and a bulk density of 0.43 g/cm³. Except for the use of non-woven fabric B12, the double-sided PSA sheet of Example 12 was obtained in the same manner as Example 1.

The double-sided PSA sheets obtained in Examples 1 to 12 were stored at 50 °C over 3 days from the production day and subjected to the following evaluation experiments. The ethyl acetate-insoluble content of a PSA sample obtained from each of the PSA sheets after the storage was 48 %.

### Measurement of adhesive strength (peel strength)

For each sample, the release liner was removed from one side of the double-sided PSA sheet to expose a PSA layer. Polyethylene phthalate (PET) film of 25-µm thickness was adhered to the exposed PSA layer as a backing. A test piece of 20-mm width and 100-mm length was cut out from the backed PSA sheet. The test piece was affixed to a SUS3 04 stainless steel plate as the adherend by pressing with a 2-kg roller back and forth once. This was stored at 23 °C for 30 minutes and in accordance with JIS Z0237, peel strength (N/20mm-width) was measured using a tensile tester at a temperature of 23 °C, relative h umidity of 50 %, pulling speed (peel speed) of 300 mm/min and peel angle of 180°.

### Contour following property

The release liner was removed from one side of the double-sided PSA sheet to expose a PSA layer. The exposed PSA layer was adhered to an aluminum plate of 0.5-mm thickness, 10-mm width and 90-mm length. The length of the test piece was arched to follow the curve of a cylinder of 50-mm diameter. The release liner on the other side was removed from the test piece to expose the other PSA layer, which was then press-bonded to a polypropylene plate using a laminator. This was stored at 23 °C for 24 hours and subsequently heated at 70 °C for two hours; and the distance (height) from the surface of the polypropylene plate to one of the test piece edges that was lifted from the plate was measured in mm. The measurement was carried out with three test pieces (n = 3) and the average distance was defined as the contour-following property (lifted-edge height) of the double-sided PSA sheet.

### Substrate failure test

A 15-mm by 15-mm piece was cut out of each double-sided PSA sheet. A test piece was prepared by adhering an aluminum plate of 0.1-mm thickness, 20-mm width and 100-mm length to the both sides of the cut piece. The test piece was stored at 60 °C for 24 hours and cooled to room temperature. T-peel was conducted on the test piece by holding the two edges of the aluminum plate with hands and peeling at a speed of about 10 m/min. After removing (peeling) the aluminum plate, the appearance of the resulting double-sided PSA sheet was visually observed and the degree of substrate failure was evaluated as follows:
0: No substrate failure was observed.
1: Substrate failure was observed over a part surface of the resulting double-sided PSA sheet
2: Substrate failure was observed over essentially the entire surface of the resulting double-sided PSA sheet

### Presence of PSA residues

The samples in which no substrate failure was observed in the above test were further observed visually for the presence of PSA residues left on the aluminum plate surfaces and evaluated as follows.
0: No PSA residues were observed.
1: Some PSA residues were observed.

The results of the evaluation experiments were summarized in Tables 1 and 2 along with the compositions and properties of the substrate such as the grammage, thickness, bulk density, fiber composition, presence and type of impregnating agent, tensile strength and so on. The minus sign (-) in the tables indicates that the sample was not evaluated for that particular property. The tensile strength of each non-woven fabric substrate was measured as follows: a first test piece of each sample was prepared by cutting the non-woven fabric substrate into a strip of 15-mm width in such a way that the machine direction (MD) of the substrate aligned with the length of the strip. The first test piece was stretched using a tensile tester set at a chuck distance of 100 mm and a pulling speed of 300 mm/min and the ultimate (maximum) strength was measured in N/15mm as the tensile strength of the non-woven fabric in the machine (vertical) direction (MD). A second test piece of each sample was prepared by cutting the non-woven fabric into a strip of 15-mm width in such a way that the cross-machine direction (CD) of the substrate aligned with the length of the strip. The ultimate strength of the second test piece was measured in N/15mm under the same conditions as the tensile strength of the no-woven fabric in the horizontal direction (CD).

**Table 1**

| Sample | | 1 | 2 | 3 | 4 | 5 | 6 | 7 |
|---|---|---|---|---|---|---|---|---|
| Substrate | | B1 | B2 | B3 | B4 | B5 | B6 | B7 |
| Grammage (g/m²) | | 12.4 | 17 | 15 | 14 | 14 | 16 | 16.5 |
| Thickness (µm) | | 39 | 56 | 35 | 45 | 53 | 53 | 77 |
| Bulk density (g/cm³) | | 0.32 | 0.30 | 0.43 | 0.31 | 0.26 | 0.30 | 0.22 |
| Tensile strength (N/15mm) | MD | 11.8 | 15.8 | 20.1 | 15.9 | 4.2 | 15.7 | 11.8 |
| | CD | 5.5 | 3.0 | 6.9 | 13.8 | 3.6 | 13.7 | 10.2 |
| Fiber composition | | hemp | hemp pulp rayon | hemp pulp rayon | hemp | hemp | hemp pulp | hemp |
| Impregnating agent | | viscose | starch | viscose | viscose | none | CMC | CMC |
| Peel strength (N/20mm) | | 12.1 | 13.0 | 12.0 | 11.9 | 10.0 | 13.0 | - |
| Contour-following property (mm) | | 0.2 | 1.1 | 0.2 | 0.1 | 0.9 | 7.1 | 8.4 |
| Substrate failure | | 0 | 0 | 0 | 0 | 2 | 2 | 2 |
| Presence of PSA residues | | 0 | 0 | 0 | 0 | - | - | - |

**Table 2**

| Sample | | 8 | 9 | 10 | 11 | 12 |
|---|---|---|---|---|---|---|
| Substrate | | B8 | B9 | B10 | B11 | B12 |
| Grammage (g/m²) | | 18 | 23.6 | 21.1 | 12 | 14 |
| Thickness (µm) | | 60 | 81 | 78 | 49.8 | 32.5 |
| Bulk density (g/cm³) | | 0.30 | 0.29 | 0.27 | 0.24 | 0.43 |
| Tensile strength (N/15mm) | MD | 26.0 | 28.3 | 17.3 | 9.0 | 11.9 |
| | CD | 19.0 | 21.5 | 15.7 | 1.7 | 2.1 |
| Fiber composition | | hemp | hemp | hemp | pulp PET | pulp |
| Impregnating agent | | viscose | viscose | CMC | none | none |
| Peel strength (N/20mm) | | - | - | - | - | - |
| Contour-following property (mm) | | 4.6 | 8.7 | 6.9 | 7.3 | 9.3 |
| Substrate failure | | 2 | 2 | 2 | 2 | 2 |
| Presence of PSA residues | | - | - | - | - | - |

As shown in these tables, the double-sided PSA sheets of Examples 1 through 4, all of which had a grammage of 7 g/m² to 17 g/m² (more particularly, 12 g/m² to 17 g/m²) and comprised a non-woven fabric substrate containing hemp as a fiber component that had been impregnated with viscose or starch, all exhibited excellent resistance to substrate failure in the test.
In other words, the two aluminum plates attached to each other with the double-sided PSA sheet of any of these examples were easily detached without substrate failure in the PSA sheet No presence of PSA residues was observed on the surfaces after the removal. As shown by these results, the double-sided PSA sheets of Examples 1 through 4 all exhibited excellent applicability to recyclable parts. Furthermore, the PSA sheets of Examples 1 to 4 all showed an excellent peel strength of 10 N/20mm or greater and desirable contour-following property with a lifted-edge height of 2 mm or less. Especially, the double-sided PSA sheets of Examples 1, 3 and 4, with which viscose was used as the impregnating agent, all had noticeably great contour-following ability with a lifted-edge height of 0.5 mm or less (even 0.2 mm or less).
On the other hand, the double-sided PSA sheets of Examples 5 to 12 all resulted in substrate failures. In each of these samples, one or two or more of the followings were true with its non-woven fabric substrate: a) the substrate was treated with an impregnating agent other than viscose or starch; or not treated at all; b) the grammage was far too high; and c) the substrate did not contain hemp as a fiber component Comparing the vertical tensile strength of non-woven fabrics B5 (no impregnation), B4 (impregnation with viscose), B2 (impregnation with starch) and B7 (impregnation with CMC), impregnation with CMC did not result in an increase either in the substrate failure resistance or adhesive performance (contour-following ability) although impregnation with any of viscose, starch and CMC increased the vertical tensile strength of the non-woven fabric. From these results, it was confirmed that unlike non-woven fabric impregnated with CMC, non-woven fabric impregnated with viscose or a starch integrates PSA (PSA films) well and that this ability is characteristic to the type (composition) of the impregnating agent.

As described above, the double-sided PSA sheet of the present invention provides excellent substrate failure resistance (and preferably even residue-free removal). Therefore, it can be a preferred choice for the double-sided PSA sheet used on a recyclable part (typically to fasten it to an adherend) in the fields of household appliances, automobiles, office automation equipment and various other industries whether the parts are reused in the existing forms or recycled as materials. Furthermore, because this double-sided PSA sheet exhibits excellent adhesive performance, it can be used in various fields, not limited to recyclable parts.

## Claims

1. A double-sided pressure-sensitive adhesive sheet comprising:
a pressure-sensitive adhesive layer formed of a water-dispersed pressure-sensitive adhesive composition; and
a non-woven fabric substrate to support the pressure-sensitive adhesive layer;
wherein the non-woven fabric substrate contains hemp as a fiber component that is processed with an impregnating agent selected from a group consisting of viscose and starches, and has a grammage of 7 g/m² to 17 g/m².

2. The sheet according to claim 1, wherein the pressure-sensitive adhesive composition is an aqueous emulsion comprising primarily an acrylic polymer dispersed in water.

3. The sheet according to claim 1 or 2, wherein the pressure-sensitive adhesive layer is formed by laminating on the non-woven fabric substrate a pressure-sensitive adhesive film prepared in advance by drying the pressure-sensitive adhesive composition.

4. The sheet according to any one of claims 1 to 3 that is used on a recyclable part.

5. A method for fastening a recyclable part, comprising fastening the recyclable part to an adherend using the double-sided pressure-sensitive adhesive sheet of any one of claims 1 to 4.
